# FASCICULE DE BREVET EUROPEEN

(11) **EP 2 561 599 B1**
(45) Date de publication et mention de la délivrance du brevet: **29.04.2020**
(21) Numéro de dépôt: 11715947.5
(22) Date de dépôt: 18.03.2011
(51) Int. Cl.: H02K 21/04, H02K 1/27

(54) **ROTOR DE MACHINE ÉLECTRIQUE TOURNANTE AVEC STRUCTURES INTERPOLAIRES**
ROTOR EINER ELEKTRISCHEN DREHMASCHINE MIT INTERPOLAREN STRUKTUREN
ROTARY ELECTRICAL MACHINE ROTOR HAVING INTERPOLAR STRUCTURES

(30) Priorité: 23.04.2010 FR 1053098
(43) Date de publication de la demande: 27.02.2013
(73) Titulaire: Valeo Equipements Electriques Moteur, 94046 Créteil Cedex (FR)
(72) Inventeur: KADIRI, Mostafa, 62520 Le Touquet (FR); DESENCLOS, Stéphane, 62630 Tubersent (FR)
(86) Numéro de dépôt international: PCT/FR2011/050562
(87) Numéro de publication internationale: WO 2011/131871

(56) Documents cités:
- EP-A1- 0 905 858
- FR-A1- 2 791 483
- FR-A1- 2 932 324
- FR-A1- 2 932 325
- JP-A- 2000 197 292
- US-A- 5 543 676
- US-A- 6 025 667
- US-A1- 2003 151 324
- US-A1- 2006 061 226

## Description

La présente invention concerne de manière générale les machines électriques tournantes.

Plus particulièrement, l'invention concerne des machines électriques tournantes de type alternateur ou alterno-démarreur, destinées aux véhicules automobiles.

Et plus particulièrement encore, l'invention concerne les machines électriques tournantes dont le rotor comporte un ou plusieurs bobinages d'excitation, des pôles magnétiques, et des aimants permanents disposés entre les pôles magnétiques. Du fait de cette disposition, ces aimants sont appelés aimants interpolaires.

Typiquement, le rotor a une structure à griffes. Une telle structure est constituée de deux roues polaires, opposées et imbriquées, chacune comprenant des griffes. Chaque griffe d'une roue polaire s'étend en direction de l'autre roue polaire. De plus, chaque griffe s'insère entre deux griffes consécutives de la roue polaire opposée. En outre, le rotor comporte des parties aimantées, et le bobinage d'excitation est enroulé autour de l'arbre de rotation de la machine.

Le rotor est agencé au sein d'un stator. Lorsque la machine tournante est en fonctionnement, le rotor tourne autour de son axe, et un flux magnétique circule entre les pôles magnétiques adjacents, de polarités respectives opposées, en passant par les enroulements du stator. Les aimants disposés entre les pôles magnétiques, constitués par les griffes, servent à empêcher le flux magnétique de passer directement d'un pôle à l'autre sans passer par le stator.

Cette fuite de flux d'un pôle à l'autre sans passer par le stator affecte en effet le rendement, et pénalise les performances en puissance de la machine électrique tournante. En effet, le flux passant directement d'une griffe à l'autre sans passer par le stator ne participe pas au fonctionnement de la machine. L'utilisation des aimants interpolaires permet de limiter ces fuites.

On connait des aimants interpolaires de forme globalement parallélépipédique. Chacun est placé entre deux griffes adjacentes du rotor, appartenant chacune, respectivement, à l'une des deux roues polaires. Ces aimants interpolaires sont maintenus soit par des agrafes, soit grâce à deux rainures (ou épaulements) chacune réalisée sur un des bords latéraux opposés des griffes entre lesquelles l'aimant est situé.

Le document FR 2 932 325 A1 divulgue un tel rotor de machine électrique tournante selon le préambule de la revendication 1.

Dans les applications où la machine électrique tournante doit fournir une puissance volumique importante, l'utilisation de ces aimants en grand nombre est indispensable.

En raison du coût de la matière première dans laquelle ils sont réalisés, par exemple des terres rares ou de la ferrite, ces aimants interpolaires représentent une partie substantielle du coût du rotor.

Les principales sources de matière première utilisée pour ces aimants sont limitées en nombre et contrôlées dans leur exploitation. La matière première est donc sujette à une spéculation financière qui a fait exploser son niveau de prix.

En outre, la présence des aimants pouvant perturber l'équilibre mécanique de la machine électrique tournante par rapport à son axe de rotation, leur utilisation n'est pas répandue, car elle rend délicat l'équilibrage mécanique du rotor ce qui complexifie le process. Le poids des ferrites est deux fois plus important que celui des terres rares.

La présente invention vise à améliorer la situation, en optimisant la conception des machines électriques tournantes pour réduire les coûts liés à l'utilisation des aimants dans les rotors de ces machines.

A cet effet, selon un premier aspect de l'invention, il est proposé un rotor de machine électrique tournante selon la revendication 1.

Ainsi, il est possible de concevoir des rotors de machine électrique optimisés du point de vue électrique, et du coût. En effet, il est possible de s'approcher finement d'un objectif par exemple en intensité de courant électrique fourni (en puissance électrique fournie, ou autre), tout en limitant le coût des aimants à utiliser à cet effet. Par exemple, des ensembles magnétiques selon une première nuance d'aimant efficace et donc coûteuse sont utilisés pour s'approcher au mieux de l'objectif, puis pour compléter et atteindre l'objectif, le rotor est complété avec des ensembles magnétiques selon une deuxième nuance d'aimant moins coûteuse.

Par exemple, au moins deux ensembles magnétiques sont constitués de deux nuances d'aimant distinctes choisies parmi au moins des matières ferrites, des matières terres rares, et des matières Alnico (Aluminium Nickel Cobalt).

Dans des modes de réalisation, au moins un premier groupe d'ensembles magnétiques comportant au moins deux ensembles magnétiques de la même nuance, ont des positions angulaires sensiblement équi-réparties dans les espaces interpolaires.

Ainsi, malgré la présence d'ensembles magnétiques de nuances différentes et de densités différentes, le rotor reste équilibré mécaniquement dans son mouvement de rotation.

Par exemple, au moins deux ensembles magnétiques de la même nuance d'aimant sont disposés dans des positions sensiblement symétriques par rapport à l'axe de rotation du rotor dans un plan transversal perpendiculaire à l'axe de rotation du rotor.

Par exemple, le moyen d'équilibrage comporte au moins l'un parmi un alésage sur le rotor ou une adjonction de matière sur le rotor.

Selon un deuxième et un troisième aspect de l'invention, on prévoit un alternateur et un alterno-démarreur comportant un rotor selon le premier aspect.

L'invention sera mieux comprise à la lecture de la description qui va suivre, donnée uniquement à titre d'exemple, et faite en se référant aux dessins annexés dans lesquels :
- la figure 1 est une vue selon un plan de coupe longitudinal d'un rotor selon un mode de réalisation,
- la figure 2 est une vue en perspective d'un rotor selon un mode de réalisation,
- les figures 3, 4, 5a et 5b sont des vues selon un plan de coupe radial d'un rotor selon des modes de réalisation qui ne font pas partie de l'invention,
- la figure 5c est une vue selon un plan de coupe radial d'un rotor selon un mode de réalisation,
- la figure 6 est un graphique illustrant les performances d'un rotor selon un mode de réalisation, et d'un rotor selon l'art antérieur,
- les figures 7 et 8 illustrent des moyens de rééquilibrage mécanique selon des modes de réalisation de l' invention.

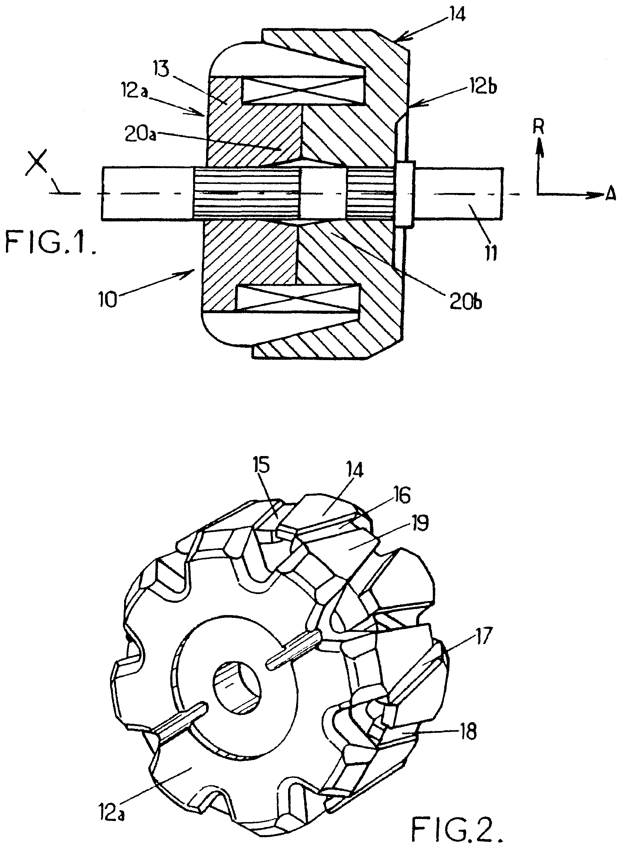

Un rotor selon un mode de réalisation de l'invention est décrit en référence à la figure 1. Ce rotor comprend au moins un axe de symétrie X. Cet axe correspond à l'axe de rotation du rotor. Dans la présente description, on dénomme ainsi « direction axiale » et « direction radiale », des directions telles que respectivement indiquées par les flèches "A" et "R" de la figure 1.

Le rotor 10 de la figure 1 peut être utilisé dans une machine électrique tournante telle qu'un alternateur du type polyphasé, pour véhicule automobile à moteur thermique. L'alternateur peut être réversible, et fonctionner en alterno-démarreur ayant un mode alternateur et un mode moteur électrique, notamment pour démarrer le moteur thermique du véhicule.

Le rotor 10 est solidaire en rotation d'un arbre central 11, appelé arbre de rotor. Le rotor, dans une implantation dans une machine électrique tournante, est disposé dans un stator (non représenté) qui entoure le rotor. Le rotor 10 est réalisé sous forme d'un rotor à griffes comprenant deux roues polaires 12a, 12b, ici axialement juxtaposées. Chaque roue présente un flasque transversal 13 de forme annulaire. Ce flasque transversal est pourvu, à sa périphérie extérieure, de griffes polaires 14 s'étendant sensiblement axialement. Les deux roues polaires sont accouplées par leur noyau respectif 20a et 20b. Le noyau 20a (respectivement 20b) est de forme sensiblement cylindrique et s'étend à partir du flasque transversal 13 de la roue 12a (respectivement 12b) selon la direction de l'axe du rotor vers l'autre roue polaire 12b (respectivement 12a).

Un entrefer annulaire existe entre la face périphérique extérieure des griffes polaires 14 et la périphérie intérieure du corps du stator. Il correspond à la distance radiale entre une extrémité externe des griffes polaires et une extrémité interne du stator.

Les griffes 14 ont une section transversale, c'est-à-dire dans un plan de coupe perpendiculaire à l'axe du rotor, qui est de forme globalement trapézoïdale ou triangulaire. Les griffes de chacune des roues polaires 12a, 12b sont dirigées axialement vers le flasque 13 de l'autre roue polaire 12a, 12b. En outre, la griffe 14 d'une roue polaire 12a, 12b pénètre dans l'espace existant entre deux griffes 14 adjacentes de l'autre roue polaire 12a, 12b. Ainsi, les griffes 14 des roues polaires 12a, 12b sont imbriquées.

Sur la figure 2, on peut voir des ensembles magnétiques 15, 16, 17, 18 disposés dans entre deux griffes imbriquées, chacune appartenant à une roue polaire. Dans le mode de réalisation de la figure 2, chaque roue polaire comporte huit griffes. Indifféremment, dans d'autres modes de réalisation, on peut prévoir un nombre différent de griffes comme par exemple six griffes. Pour insérer ces ensembles magnétiques, il peut être réalisé selon des techniques connues de la personne du métier, des rainures (ou épaulements) axiales sur les faces latérales des griffes. Par exemple, l'ensemble magnétique 16 est inséré dans les rainures (ou épaulements) réalisées respectivement dans les griffes 14 et 19 du rotor, de sorte à ce que l'ensemble magnétique soit en contact, à la fois avec la griffe 14 de la roue polaire 12b, et avec la griffe imbriquée 19 de l'autre roue polaire 12a.

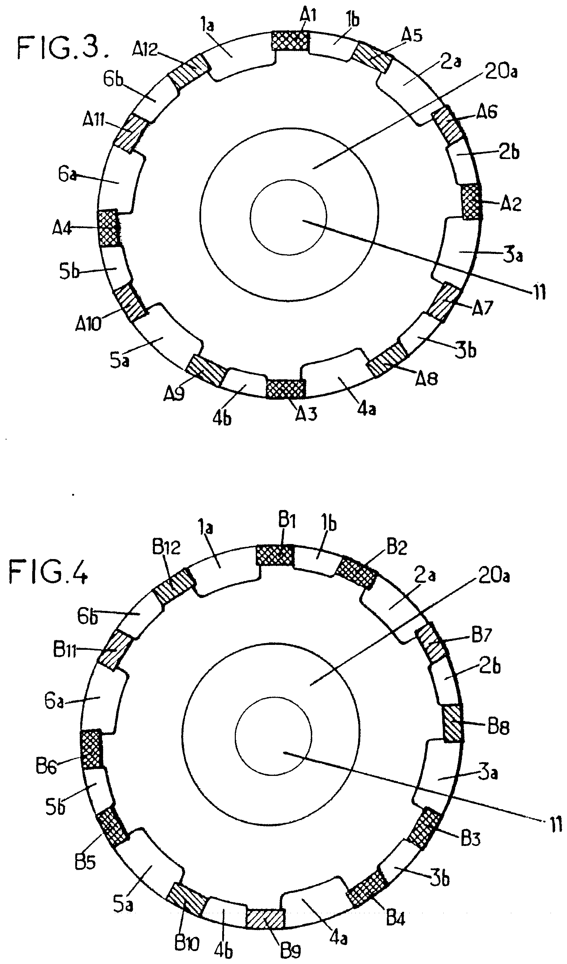

Les figures 3, 4, 5a, 5b, et 5c illustrent plusieurs dispositions des ensembles magnétiques dans un rotor ayant deux roues polaires par exemple avec chacune six griffes. Ces figures 3, 4, 5a, 5b, et 5c sont des coupes transversales du rotor, qui représentent en coupe :
- le noyau 20a,
- les griffes 1a, 2a, 3a, 4a, 5a, et 6a de la roue 12a à laquelle appartient le noyau 20a, et
- les griffes 1b, 2b, 3b, 4b, 5b, et 6b de la roue opposée 12b.

Les griffes de la roue 12a apparaissent avec une section supérieure à la section avec laquelle apparaissent les griffes de la roue 12b car la section selon laquelle est représentée le rotor est une section dans la roue polaire 12a, et parce que les griffes ont une forme trapézoïdale.

Sur les figures 3, 4, 5a, 5b, et 5c, les ensembles magnétiques insérés entre les griffes sont constitués d'un seul aimant. Il peut être prévu des ensembles magnétiques comportant d'autres éléments comme par exemple une lame fine métallique de maintien de l'aimant, des agrafes de maintien, ou autre.

Sur la figure 3, quatre aimants en ferrites A1, A2, A3, et A4 sont disposés respectivement entre les griffes 1a et 1b, 2b et 3a, 4a et 4b, 5b et 6a. En outre, entre huit aimants en terres rares A5, A6, A7, A8, A9, A10, A11, et A12 sont disposés respectivement entre les griffes 1b et 2a, 2a et 2b, 3a et 3b, 3b et 4a, 4b et 5a, 5a et 5b, 6a et 6b, 6b, et 1a.

Les aimants d'une même nuance sont disposés deux à deux de part et d'autre de l'axe du rotor. En outre, les aimants d'une même nuance ont des positions régulièrement réparties (équi-réparties) sur la circonférence du rotor.

Sur la figure 4, six aimants en ferrites B1, B2, B3, B4, B5 et B6 sont disposés respectivement entre les griffes 1a et 1b, 1b et 2a, 3a et 3b, 3b et 4a, 5a et 5b, 5b et 6a. En outre, entre six aimants en terres rares B7, B8, B9, B10, B11, et B12 sont disposés respectivement entre les griffes 2a et 2b, 2b et 3a, 4a et 4b, 4b et 5a, 6a et 6b, 6b, et 1a.

Dans la configuration de la figure 4, les aimants d'une même nuance ne sont pas disposés deux à deux de part et d'autre de l'axe du rotor. Toutefois, les groupes d'aimants d'une même nuance ont des positions régulièrement réparties (équi-réparties) sur la circonférence du rotor.

Dans les configurations des figures 3 et 4, on garde une bonne répartition massique des ensembles magnétiques, ce qui ne perturbe pas le mouvement de rotation du rotor autour de son axe.

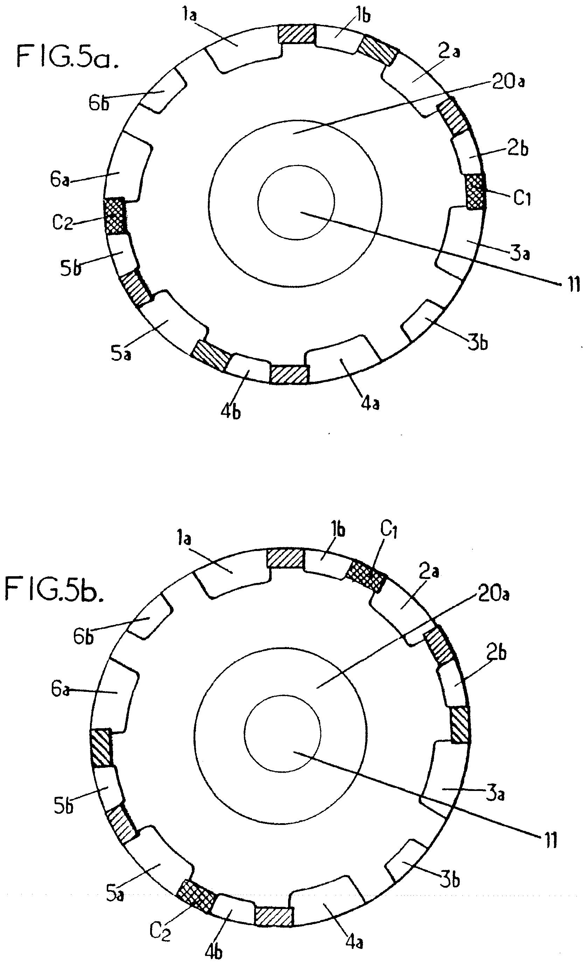

Il peut être prévu de ne pas remplir tous les espaces interpolaires, comme par exemple dans la configuration de la figure 5a. Dans cette configuration, deux aimants en ferrites C1 et C2 sont respectivement disposés entre les griffes 2b et 3a, et 5b et 6a. Six aimants en terres rares sont disposés respectivement entre les griffes 1a et 1b, 1b et 2a, 2a et 2b, 4a et 4b, 4b et 5a, 5a et 5b. Aucun aimant n'est disposé entre les griffes 3a et 3b, 3b et 4a, 6a et 6b, 6b et 1a.

Malgré la répartition non uniforme des aimants autour du rotor, il est possible de garder de bonnes performances.

Afin d'illustrer ces performances, le tableau 1 ci-dessous permet de comparer, pour différentes vitesses de rotation du rotor :
- d'une part, l'intensité du courant délivré par un rotor de l'art antérieur avec deux roues polaires ayant chacune six griffes et ayant huit aimants interpolaires en terres rares, et
- d'autre part, l'intensité du courant délivré par un rotor ayant autant de griffes, et six aimants interpolaires en terres rares et deux aimants interpolaires en ferrites, les aimants étant disposés selon trois configurations nommées A, B, et C.

La configuration A correspond à la disposition des aimants illustrée par la figure 5a.

La configuration B, illustrée par la figure 5b, est une variante de la configuration A et correspond:
- à la disposition des deux aimants en ferrites C1 et C2 respectivement entre les griffes 1b et 2a, et 5a et 4b,
- l'absence d'aimant entre les griffes 3a et 3b, 3b et 4a, 6a et 6b, 6b et 1a, et
- la disposition d'aimants en terres rares dans les autres espaces interpolaires.

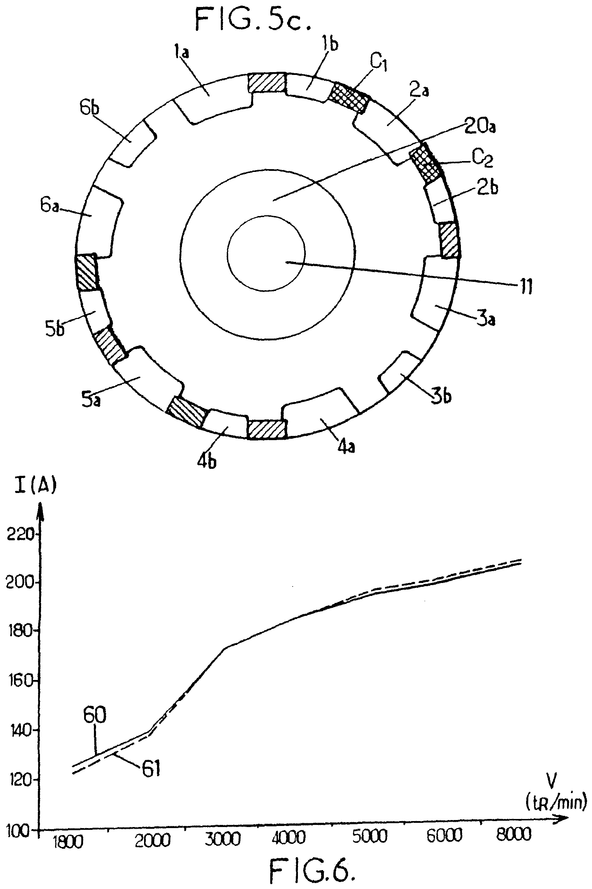

La configuration C, illustrée par la figure 5c, est une autre variante de la configuration A et correspond à :
- la disposition des deux aimants C1 et C2 respectivement entre les griffes 1b et 2a, et 2a et 2b,
- l'absence d'aimant entre les griffes 3a et 3b, 3b et 4a, 6a et 6b, 6b et 1a, et
- la disposition d'aimants en terres rares dans les autres espaces interpolaires.

**Tableau 1**

| Vitesse (tour/minute) | Courant fourni (A) | | | |
|---|---|---|---|---|
| | rotor de l'art antérieur (A) | rotor selon la disposition A | rotor selon la disposition B | rotor selon la disposition C |
| 1800 | 125 | 121,7 | 122,9 | 122,1 |
| 2000 | 138 | 136,5 | 137,5 | 137 |
| 3000 | 171 | 171,1 | 171,6 | 171,9 |
| 4000 | 183,2 | 183,2 | 183,4 | 184 |
| 5000 | 192,3 | 193,2 | 193,3 | 193,7 |
| 6000 | 196,8 | 198,4 | 198,7 | 198,3 |
| 8000 | 203,4 | 204,7 | 205,2 | 205 |

La lecture de ce tableau permet de constater qu'en moyenne la différence de performance est inférieure à 1%. Les rotors selon les modes de réalisation présentés gardent donc des performances équivalentes à celles du rotor de l'art antérieur. L'évolution du courant fourni en fonction de la vitesse du rotor est illustrée par le graphique de la figure 6. La courbe 60 représente l'évolution du courant fourni par le rotor selon l'art antérieur, et la courbe 61 représente l'évolution de la moyenne des courants fournies par les rotors selon les configurations A, B, et C.

Selon un aspect de l'invention, les coûts de production des rotors sont réduits.

Au jour du dépôt de la présente demande, un aimant en terres rares usuellement utilisé comme aimant interpolaire coûte environ 0,40 euros, un aimant en ferrites usuellement utilisé comme aimant interpolaire coûte environ 0,09 euros.

Ainsi, le coût de la matière première des aimants interpolaires du rotor selon l'art antérieur est de 8x0,40 = 3,60 euros, et le coût de la matière première pour les rotors selon les modes de réalisation présentés est de 6x0,60 + 2x0,09 = 2,58 euros. La présente invention permet ici de réaliser une économie de 28,3%.

La présente invention permet donc de réaliser de très grandes économies, en particulier dans la production en grandes séries de rotors.

Le tableau 1 permet également de remarquer que la configuration de la disposition des aimants influe peu sur les performances du rotor. Ainsi, il peut être choisi des répartitions uniformes des aimants afin de garantir un bon comportement mécanique du rotor. Toutefois, par exemple pour simplifier un procédé d'insertion des aimants, il peut aussi être choisi des répartitions non uniformes (comme par exemple celle de la figure 5c).

Dans le cas d'une répartition non uniforme, on peut alors prévoir des moyens de rééquilibrage du rotor afin de ne pas pénaliser son comportement mécanique.

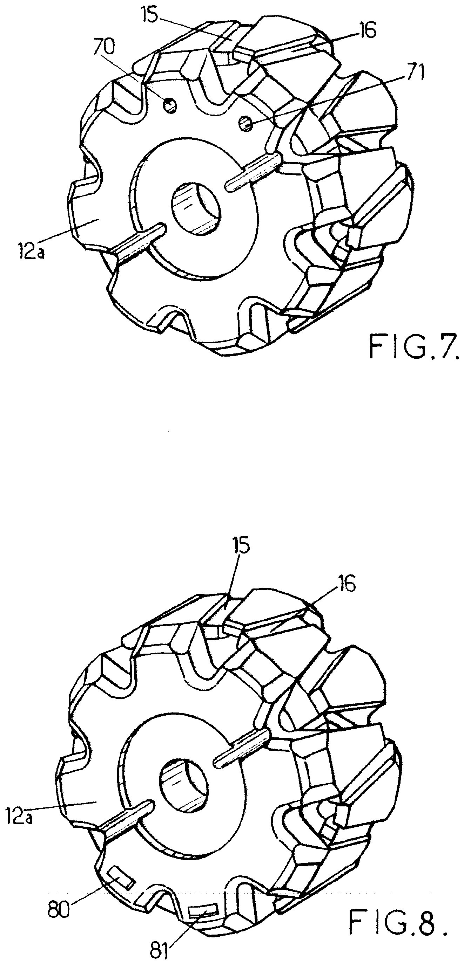

De tels moyens de rééquilibrage sont illustrés par les figures 7 et 8. La figure 7 illustre la réalisation d'alésages 70 et 71 sur le flasque de la roue 12a, qui comporte par exemple huit griffes au niveau de griffes portant des aimants 15 et 16. Ainsi, l'alésage de matière compense la présence de la masse des aimants. Dans des réalisations différentes (non représentées), lorsque des aimants de masses différentes sont disposés symétriquement par rapport à l'axe de symétrie du rotor, l'alésage est réalisé au niveau des griffes portant les aimants les plus lourds. L'alésage peut également être réalisé sur d'autres parties du rotor, comme par exemple la griffe, ou sur d'autres éléments non représentés. La figure 8 illustre la réalisation d'une adjonction de matière, par exemple par soudage. Deux éléments 80 et 81, par exemple métalliques, sont soudés sur le flasque de la roue 12a, à des positions sensiblement symétriques par rapport aux aimants 15 et 16. Dans des réalisations différentes, l'adjonction de matière peut être effectuée au niveau des griffes portant des aimants de masse plus faible que des aimants disposés symétriquement par rapport à l'axe de symétrie du rotor. L'adjonction de matière peut être réalisée sur des éléments non représentés du rotor, comme par exemple un ventilateur, afin de compenser la masse des aimants 15 et 16.

La présente invention a été décrite et illustrée dans la présente description détaillée et dans les figures. La présente invention ne se limite pas aux formes de réalisation présentées. D'autres variantes, modes de réalisation et combinaisons de modes de réalisation décrits peuvent être déduits et mis en œuvre par la personne du métier à la lecture de la présente description et des figures annexées.

A la lecture de la présente description, la personne du métier comprend que de nombreuses réalisations de l'invention sont possibles. Il est possible de combiner plusieurs des modes de réalisation décrits ci-avant. En outre, la personne du métier, à la lecture de la présente description, pourra déduire d'autres configurations pour la répartition des ensembles magnétiques dans les espaces interpolaires.

Dans les revendications, le terme "comporter" n'exclut pas d'autres éléments ou d'autres étapes. L'article indéfini « un » n'exclut pas le pluriel. Un seul processeur ou plusieurs autres unités peuvent être utilisées pour mettre en œuvre l'invention. Les différentes caractéristiques présentées et/ou revendiquées peuvent être avantageusement combinées. Leur présence dans la description ou dans des revendications dépendantes différentes, n'exclut pas cette possibilité. Les signes de référence ne sauraient être compris comme limitant la portée de l'invention.

## Revendications

1. Rotor (10) de machine électrique tournante, ayant un axe autour duquel il peut être entraîné en rotation, et autour duquel rotor peut être agencé un stator, ledit rotor comportant :
deux roues polaires (12a, 12b) ayant chacune une série de griffes polaires (14) s'étendant suivant une direction axiale et ayant une section dans un plan perpendiculaire à l'axe qui est sensiblement trapézoïdale, ces griffes polaires s'étendant depuis une extrémité radiale externe de ladite roue polaire (12a), en direction de l'autre roue polaire (12b), lesdites roues polaires étant agencées de manière que chaque griffe (14) d'une roue polaire est située dans l'espace interpolaire existant entre deux griffes polaires consécutives de l'autre roue polaire ; et dans lequel
dans au moins une partie des espaces interpolaires sont agencés des ensembles magnétiques (A1, ..., A12, B1, ..., B12, C1, C2), chaque ensemble magnétique étant logé dans un unique espace interpolaire et chaque ensemble magnétique comportant un seul aimant,
**caractérisé en ce que** au moins deux ensembles magnétiques ont des nuances d'aimant respectivement différentes l'une de l'autre,
rotor (10) dans lequel des ensembles magnétiques d'au moins un deuxième groupe (C1, C2) comportant au moins deux ensembles magnétiques de la même nuance, ont des positions qui ne sont pas sensiblement équi-réparties dans les espaces interpolaires, et comportant un moyen d'équilibrage mécanique du rotor (70, 71, 80, 81) par rapport à l'axe de rotation du rotor adapté pour compenser le déséquilibre du rotor engendré par la répartition des ensembles magnétiques.

2. Rotor selon la revendication 1, dans lequel au moins deux ensembles magnétiques sont constitués de deux nuances d'aimant distinctes choisies parmi au moins des matières ferrites, des matières terres rares, et des matières Alnico.

3. Rotor selon l'une des revendications précédentes, dans lequel des ensembles magnétiques d'au moins un premier groupe d'ensembles magnétiques (A5-A6, A7-A8, A9-A10, A11-A12) comportant au moins deux ensembles magnétiques de la même nuance, ont des positions angulaires sensiblement équi-réparties dans les espaces interpolaires.

4. Rotor selon une des revendications 1 à 2, dans lequel au moins deux ensembles magnétiques de la même nuance d'aimant (A1-A3, A2, A4) sont disposés dans des positions angulaires sensiblement symétriques par rapport à l'axe de rotation du rotor dans un plan transversal perpendiculaire à l'axe de rotation du rotor.

5. Rotor selon l'une quelconque des revendications précédentes, dans lequel le moyen d'équilibrage comporte au moins l'un parmi un alésage sur le rotor ou une adjonction de matière sur le rotor.

6. Alternateur comprenant un rotor selon l'une quelconque des revendications précédentes.

7. Alterno-démarreur comprenant un rotor selon l'une quelconque des revendications 1 à 5.

## Patentansprüche

1. Rotor (10) einer drehenden elektrischen Maschine, der eine Achse besitzt, um die herum er drehangetrieben werden kann, und um den herum ein Stator angeordnet werden kann, wobei der Rotor umfasst:
zwei Polräder (12a, 12b), die jeweils eine Reihe von Polklauen (14) besitzen, die sich entlang einer axialen Richtung erstrecken und einen Querschnitt in einer Ebene senkrecht zu der Achse haben, der im Wesentlichen trapezförmig ist, wobei sich diese Polklauen von einem äußeren radialen Ende des Polrades (12a) aus in Richtung des anderen Polrades (12b) erstrecken, wobei die Polräder so angeordnet sind, dass jede Klaue (14) eines Polrades in dem interpolaren Raum gelegen ist, der zwischen zwei aufeinander folgenden Polklauen des anderen Polrades besteht; und wobei
in mindestens einem Teil der interpolaren Räume magnetische Anordnungen (A1,..., A12, B1, ..., B12, C1, C2) angeordnet sind, wobei jede magnetische Anordnung in einem einzigen interpolaren Raum aufgenommen ist und jede magnetische Anordnung einen einzigen Magneten umfasst,
**dadurch gekennzeichnet, dass** mindestens zwei magnetische Anordnungen Magnetsorten haben, die jeweils voneinander verschieden sind, wobei in dem Rotor (10) magnetische Anordnungen mindestens einer zweiten Gruppe (C1, C2), die mindestens zwei magnetische Anordnungen derselben Sorte aufweisen, Positionen haben, die nicht im Wesentlichen gleichmäßig in den interpolaren Räumen verteilt sind, und ein Mittel zur mechanischen Auswuchtung des Rotors (70, 71, 80, 81) in Bezug auf die Drehachse des Rotors aufweisen, das dazu geeignet ist, die durch die Verteilung der magnetischen Anordnungen bewirkte Unwucht des Rotors auszugleichen.

2. Rotor nach Anspruch 1, wobei mindestens zwei magnetische Anordnungen aus zwei unterschiedlichen Magnetsorten bestehen, die zumindest unter Ferritmaterialien, Seltenerdmaterialien und Alnico-Materialien gewählt sind.

3. Rotor nach einem der vorhergehenden Ansprüche, wobei magnetische Anordnungen mindestens einer ersten Gruppe magnetischer Anordnungen (A5-A6, A7-A8, A9-A10, A11-A12), die mindestens zwei magnetische Anordnungen der gleichen Sorte aufweisen, Winkelpositionen haben, die in den interpolaren Räumen im Wesentlichen gleichmäßig verteilt sind.

4. Rotor nach einem der Ansprüche 1 bis 2, wobei mindestens zwei magnetische Anordnungen der gleichen Magnetsorte (A1-A3, A2, A4) in Winkelpositionen eingerichtet sind, die in Bezug auf die Drehachse des Rotors in einer Querebene senkrecht zur Drehachse des Rotors im Wesentlichen symmetrisch sind.

5. Rotor nach einem der vorhergehenden Ansprüche, wobei das Auswuchtmittel mindestens eines unter einer Bohrung am Rotor oder einer Materialanfügung am Rotor umfasst.

6. Wechselstromgenerator mit einem Rotor nach einem der vorhergehenden Ansprüche.

7. Startergenerator mit einem Rotor nach einem der Ansprüche 1 bis 5.

## Claims

1. Rotary electrical machine rotor (10) having an axis about which it can be driven in rotation, and around which rotor it is possible to arrange a stator, said rotor comprising:
two pole wheels (12a, 12b), each having a set of pole claws (14) extending in an axial direction and having an essentially trapezoidal cross section in a plane perpendicular to the axis, these pole claws extending from an outer radial end of said pole wheel (12a), towards the other pole wheel (12b), said pole wheels being arranged such that each claw (14) of one pole wheel is located in the interpolar space existing between two consecutive pole claws of the other pole wheel; and in which
in at least part of the interpolar spaces there are arranged magnetic assemblies (Al, ..., A12, B1, ..., B12, C1, C2), each magnetic assembly being received in a single interpolar space and each magnetic assembly comprising a single magnet,
**characterized in that** at least two magnetic assemblies have magnet grades that are respectively different from one another,
rotor (10) in which magnetic assemblies of at least a second group (C1, C2) comprising at least two magnetic assemblies of the same grade, have positions which are not essentially equally distributed in the interpolar spaces, and comprising a means for the mechanical balancing of the rotor (70, 71, 80, 81), with respect to the axis of rotation of the rotor, which is suitable for compensating for the imbalance of the rotor caused by the distribution of the magnetic assemblies.

2. Rotor according to Claim 1, in which at least two magnetic assemblies consist of two different magnet grades chosen from among at least ferrite materials, rare earth materials and alnico materials.

3. Rotor according to either of the preceding claims, in which magnetic assemblies of at least a first group of magnetic assemblies (A5-A6, A7-A8, A9-A10, A11-A12) comprising at least two magnetic assemblies of the same grade, have an angular positions that are essentially equally distributed in the interpolar spaces.

4. Rotor according to either of Claims 1 and 2, in which at least two magnetic assemblies of the same magnet grade (A1-A3, A2, A4) are arranged in angular positions that are essentially symmetric with respect to the axis of rotation of the rotor in a transverse plane perpendicular to the axis of rotation of the rotor.

5. Rotor according to any one of the preceding claims, in which the balancing means comprises at least one from among a bore on the rotor or an addition of material on the rotor.

6. Alternator comprising a rotor according to any one of the preceding claims.

7. Alternator-starter comprising a rotor according to either of Claims 1 to 5.
